(19) Europäisches Patentamt
European Patent Office
Office européen des brevets

(11) **EP 4 715 714 A1**

(12) **EUROPEAN PATENT APPLICATION**

(43) Date of publication:
**25.03.2026 Bulletin 2026/13**

(21) Application number: **25202766.9**

(22) Date of filing: **17.09.2025**

(51) International Patent Classification (IPC):
**G06Q 20/40** (2012.01)   **G06N 3/042** (2023.01)
**G06N 3/08** (2023.01)

(52) Cooperative Patent Classification (CPC):
**G06Q 20/4016; G06N 3/04; G06N 3/042;**
**G06N 3/045; G06N 3/0464; G06N 3/08;**
**G06N 3/084; G06N 3/09; G06N 5/022; G06N 5/045**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.09.2024   US 202418890396**

(71) Applicant: **eBay Inc.**
**San Jose, CA 95125 (US)**

(72) Inventors:
• **HAO, Zhengyuan**
  **San Jose, 95125 (US)**
• **LIU, Jing**
  **San Jose, 95125 (US)**
• **XIE, Lingjiang**
  **San Jose, 95125 (US)**
• **WANG, Qiang**
  **San Jose, 95125 (US)**

(74) Representative: **Müller-Boré & Partner**
**Patentanwälte PartG mbB**
**Friedenheimer Brücke 21**
**80639 München (DE)**

(54) **SYSTEM AND METHOD FOR DETECTING ABNORMAL ORDER PAYMENT BEHAVIOUR USING GRAPH MODEL EMBEDDING AND ANOMALY DETECTION**

(57)    Some aspects of the present technology relate to technologies for detecting abnormal payment behavior using graph model embedding and anomaly detection. In accordance with some configurations, order payment data is collected from various sources, including e-commerce platforms, financial institutions, and payment processors. The collected payment data is structured as a graph for each order. Nodes represent individual payment transactions related to the order. Graph embedding techniques are applied to transform the payment data graph into a numerical vector space representation. The embedded data is analyzed for a particular interval of time to identify recurring patterns. A baseline for normal patterns is established for the interval of time and any patterns that deviate significantly from the baseline are flagged as potential abnormal payment behaviors. In some aspects, a graph visualization comparison tool aids in the transparent verification of reconciliations and provides intuitive insights for stakeholders.

900

EMBED, BY A GRAPH MODEL, HISTORICAL ORDERS INTO HISTORICAL GRAPH EMBEDDINGS ~910

IDENTIFY, IN REAL-TIME, AN ANOMALOUS ORDER ~912

EMBED, BY THE GRAPH MODEL, THE ANOMALOUS ORDER INTO AN ANOMALOUS GRAPH EMBEDDING ~914

RECEIVE A SELECTION OF AN EXEMPLARY GRAPH EMBEDDING OF THE HISTORICAL GRAPH EMBEDDINGS ~916

PRESENT, VIA A GRAPH VISUALIZATION TOOL, THE EXEMPLAR GRAPH EMBEDDING DEPICTED AS AN EXEMPLAR GRAPH AND THE ANOMALOUS GRAPH EMBEDDING DEPICTED AS AN ANOMALOUS GRAPH, THE GRAPH VISUALIZATION TOOL VISUALLY DISTINGUISHING THE EXEMPLAR GRAPH FROM THE ANONMALOUS GRAPH ~918

*FIG. 9*

EP 4 715 714 A1

**Description**

BACKGROUND

In e-commerce, it is crucial to have effective systems that can detect unusual activities in financial transactions and ensure the accuracy of financial records. Traditional methods are rigid and rely on fixed rules that may miss complex anomalies or generate false alarms. Additionally, traditional methods are not sufficient for the intricate financial ecosystems of e-commerce platforms and can struggle to adapt to rapid business growth. Moreover, traditional methods are time-consuming, susceptible to human error, struggle to keep up with the volume and complexity of data in modern e-commerce transactions, and create bottlenecks in financial operations, hindering scalability and timely response to discrepancies.

SUMMARY

Some aspects of the present technology relate to, among other things, detecting abnormal payment behavior using graph model embedding and anomaly detection. In accordance with some configurations, a deep graph learning method learns representative transaction patterns and enhances the accuracy of abnormal financial transaction detection and the efficiency of the reconciliation process.

To do so, order payment data is collected from various sources, including e-commerce platforms, financial institutions, and payment processors. The collected payment data is structured as a graph for each order. Nodes represent individual payment financial transaction accounts related to the order. Graph embedding techniques are applied to transform the payment data graph into a numerical vector space representation. The embedded data is analyzed for a particular interval of time to identify recurring patterns. A baseline for normal patterns is established for the interval and any patterns that deviate significantly from the baseline are flagged as potential abnormal payment behaviors. In some aspects, a graph visualization comparison tool aids in the transparent verification of reconciliations and provides intuitive insights for stakeholders.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

BRIEF DESCRIPTION OF THE DRAWINGS

The present technology is described in detail below with reference to the attached drawing figures, wherein:

FIG. 1 is a block diagram illustrating an exemplary system, in accordance with some implementations of the present disclosure;

FIGS. 2A and 2B are diagrams showing examples of a graph visualization tool, in accordance with some implementations of the present disclosure;

FIG. 3 is an example of a structure that trains a deep graph neural network, in accordance with some implementations of the present disclosure;

FIG. 4 is a diagram of an example network architecture for detecting abnormal payment behavior using graph model embedding and anomaly detection, in accordance with some implementations of the present disclosure;

FIG. 5 is an example of a graph similarity based abnormal transaction detection, in accordance with some implementations of the present disclosure;

FIG. 6 is a diagram of a graph similarity based abnormal transaction detection process, in accordance with some implementations of the present disclosure;

FIGS. 7A-7D are examples of generalized abnormal transaction detection results, in accordance with some implementations of the present disclosure;

FIG. 8A is an example of a graphically represented order with similar normative orders shown in the upper right quadrant, in accordance with some implementations of the present disclosure;

FIG. 8B is an example of a comparison between an abnormal and a normal order, in accordance with some implementations of the present disclosure;

FIG. 9 is a flow diagram showing a method for detecting abnormal payment behavior using graph model embedding and anomaly detection, in accordance with some implementations of the present disclosure; and

FIG. 10 is a block diagram of an exemplary computing environment suitable for use in implementations of the present disclosure.

DETAILED DESCRIPTION

The continued growth of online transaction platforms (including, for instance, e-commerce and other systems that support online transactions) presents a particular challenge for detecting unusual activities in online transactions and ensure the accuracy of financial records at a level that did not exist before the advent of such platforms. Traditional methods for detecting financial abnormalities primarily include rule-based and daily source detail file-based reconciliation approaches. Rule-based systems, while widely used and helpful for automating parts of abnormal financial transaction detection and end-to-end transaction monitoring, have limitations. For example, rule-based systems are rigid and rely on fixed rules that may miss complex anomalies or generate false alarms. Additionally, rule-based systems provide a superficial approach that is not sufficient for the intricate financial ecosystems of e-commerce platforms and can struggle to adapt to rapid business growth.

Another conventional method for financial reconciliation entails meticulously comparing transaction details across various financial statements (e.g., bank statements and ledger entries). However, this detailed approach comes with its own set of challenges. It is time-consuming, susceptible to human error, and also struggles to keep up with the volume and complexity of data in modern e-commerce transactions. Additionally, the manual nature of these reconciliations creates bottlenecks in financial operations, hindering scalability and timely response to discrepancies.

Aspects of the technology described herein improve the ability to detect abnormal payment behavior using graph model embedding and anomaly detection. The techniques described for detecting abnormal payment behavior and anomalies have been demonstrated to provide marked improvement over previous approaches and do so at scale and in a timely fashion. Moreover, the techniques described can identify previously unknown anomalies and/or sudden fluctuations in pattern frequency.

In accordance with some aspects of the technology described herein, utilizing capabilities of a trained deep graph neural network, anomalous transactions can be identified within a dataset. In aspects, the framework is bifurcated into two methodologies. The first method, a graph pattern-based anomaly detection, assesses the presence of irregular transactions for a particular interval of time by analyzing the distribution patterns during that interval. The second method, graph similarity-based anomaly detection, can be employed when a particular transaction is suspected to be problematic. This technique facilitates the identification of the specific account within the transaction that may be exhibiting anomalous behavior.

An "order," as used herein, refers to transactions and may be employed interchangeably with a "transaction."

A "journal," as used herein, refers to a financial transaction between two separate accounts.

A "graph pattern," as used herein, encapsulates a category of orders sharing analogous business relevance and accounting frameworks. In this way, a graph pattern facilitates collective analysis and processing. Each order may be associated with a corresponding graph pattern. The methodology for deriving a graph pattern from an order is described in more detail below.

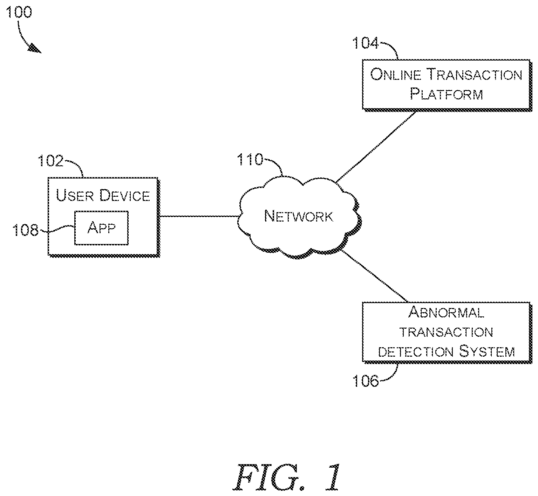

With reference now to the drawings, FIG. 1 is a block diagram illustrating an exemplary system 100 for detecting abnormal payment behavior using graph model embedding and anomaly detection, in accordance with implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

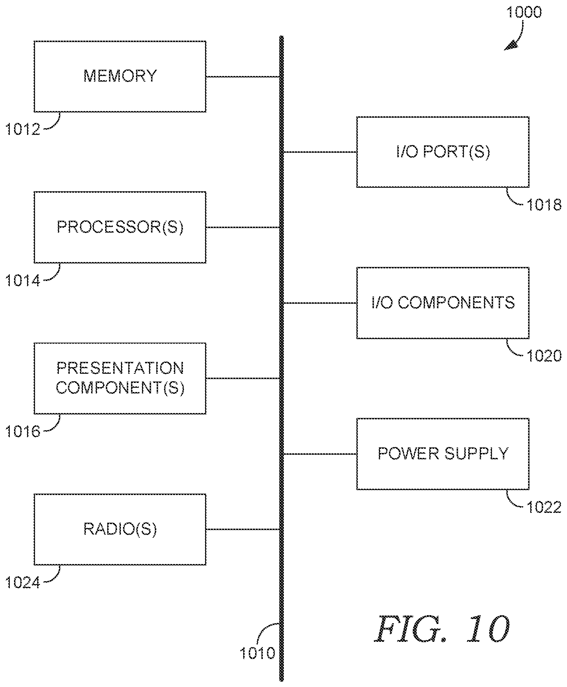

The system 100 is an example of a suitable architecture for implementing certain aspects of the present disclosure. Among other components not shown, the system 100 includes a user device 102, an online transaction platform 104, and an abnormal transaction detection system 106. Each of the user device 102, the online transaction platform 104, and the abnormal transaction detection system 106 shown in FIG. 1 can comprise one or more computer devices, such as the computing device 1000 of FIG. 10, discussed below. As shown in FIG. 1, the user device 102, the online transaction platform 104, and the abnormal transaction detection system 106 can communicate via a network 110, which may include, without limitation, one or more local area networks (LANs) and/or wide area networks (WANs). Such networking environments are commonplace in offices, enterprise-wide computer networks, intranets, and the Internet. It should be understood that any number of user devices and servers may be employed within the system 100 within the scope of the present technology. Each may comprise a single device or multiple devices cooperating in a distributed environment. For instance, the online transaction platform 104 and the abnormal transaction detection system 106 could each be provided by multiple server devices collectively providing the functionality of the online transaction platform 104 and the abnormal transaction detection system 106 as described herein. Additionally, other components not shown may also be included within the network environment.

The user device 102 can be a client device on the client-side of operating environment 100, while the online transaction platform 104 and the abnormal transaction detection system 106 can be on the server-side of operating environment 100. The online transaction platform 104 and/or the abnormal transaction detection system 106 can each comprise server-side software designed to work in conjunction with client-side software on the user device 102 so as to implement any combination of the features and functionalities discussed in the present disclosure. For instance, the user device 102 can include an application 108 for interacting with the online transaction platform 104 and/or the abnormal transaction detection system 106. The application 108 can be, for instance, a web browser or a dedicated application for providing functions, such as interacting with the online transaction platform 104 and/or the abnormal transaction detection system 106. This division of operating environment 100 is provided to illustrate one example of a suitable environment, and there is no requirement for each implementation that any combination of the online transaction platform 104 and the abnormal transaction detection system 106 remain as separate entities. For instance, in some aspects, the abnormal transaction detection system 106 is a part of the online transaction platform 104. While the operating environment 100 illustrates a configuration in a networked environment with a separate user device, online transaction platform, and abnormal transaction detection system, it should be understood that other configurations can be employed in which aspects of the various components are combined.

The user device 102 may comprise any type of computing device capable of use by a user. For example, in one aspect, a user device may be the type of computing device 1000 described in relation to FIG. 10 herein. By way of example and not limitation, the user device 102 may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device. A user may be associated with the user device 102 and may interact with the online transaction platform 104 and/or the abnormal transaction detection system 106 via the user device 102.

The online transaction platform 104 can be implemented using one or more server devices, one or more platforms with corresponding application programming interfaces, cloud infrastructure, and the like. The online transaction platform 104 generally comprises any computer-based system that facilitates electronic transactions over the network 110 via user devices, such as the user device 102. In some aspects, the online transaction platform 104 comprises a listing platform (e.g., an e-commerce platform) that generally provides, to the user device 102, item listings describing items (physical or digital) available for purchase, rent, streaming, download, etc., and facilitates electronic purchase transactions for items. In other aspects, the online transaction platform 104 comprises a payment platform that facilitates electronic payment transactions between two accounts. In still further aspects, the online transaction platform 104 comprises a banking platform that facilitates the electronic transfer of money between accounts.

As described in further detail below, the abnormal transaction detection system 106 detecting abnormal payment behavior using graph model embedding and anomaly detection corresponding to transactions between a user device, such as the user device 102, and an online transaction platform, such as the online transaction platform 104. The abnormal transaction detection system 106 may be in addition to other components that provide further additional functions beyond the features described herein. The abnormal transaction detection system 106 can be implemented using one or more server devices, one or more platforms with corresponding application programming interfaces, cloud infrastructure, and the like. While the abnormal transaction detection system 106 is shown separate from the online transaction platform 104 and the user device 102 in the configuration of FIG. 1, it should be understood that in other configurations, some of the functions of the abnormal transaction detection system 106 can be provided on the online transaction platform 104 and/or the user device.

In some aspects, the functions performed by components of the abnormal transaction detection system 106 are associated with one or more applications, services, or routines. In particular, such applications, services, or routines may operate on one or more user devices, servers, may be distributed across one or more user devices and servers, or be implemented in the cloud. Moreover, in some aspects, these components of the abnormal transaction detection system 106 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 100, it is contemplated that in some aspects, functionality of these components can be shared or distributed across other components.

The abnormal transaction detection system 106 detects abnormal payment behavior using graph model embedding and anomaly detection on the online transaction platform 104. The abnormal transaction detection system 106 constructs a graph pattern based on journal information of orders (such as journal information of orders corresponding to online transaction platform 104). Next, the abnormal transaction detection system 106 performs an embedding process for each order. The resultant vector is hashed to generate the graph pattern.

The abnormal transaction system 106 depicted accounts as vertices within a graph and transactional connections between pairs of accounts as directed edges linking the vertices. As a result, the abnormal transaction system 106 generates a directed graph for subsequent analysis. By employing techniques of deep graph learning, the abnormal transaction system 106 may analyze the directed graph to extract insights and meet desired functional objectives.

In some aspects, abnormal transaction system 106 includes a graph visualization tool that enables the graphical representation of data. The graphical representation may depict any number of orders. Additionally, the graph visualization tool of the abnormal transaction system 106 may facilitate the concurrent portrayal of a single data set in two distinct graphical configurations, presented adjacently. This feature aids in comparative analysis by synchronizing selections across both visualizations. Such functionality proves beneficial in contrasting pairs of orders.

In some aspects, the abnormal transaction system 106 monitors an order pattern for an interval of time. This enables the detection of anomalies such as the emergence of new patterns, the disappearance of existing ones, or sudden fluctuations in pattern frequency. Such irregularities may signify system malfunctions, alterations in accounting procedures, or external security breaches. While not all detected anomalies necessitate immediate intervention, monitoring may preempt potential order-related issues that could result in financial losses for an organization.

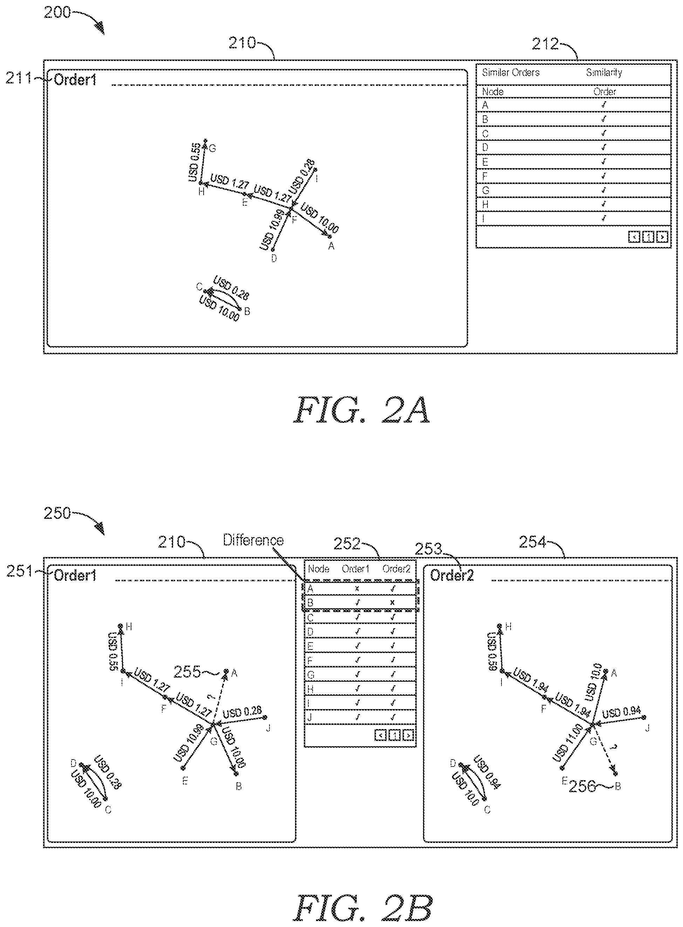

FIGS. 2A and 2B depicts a diagram 200 showing an example of a graph visualization tool, in accordance with some aspects of the technology described herein. As shown, FIGS. 2A and 2B present a visual comparison between a solitary graph structure 200 and a dual-graph configuration 250. Specifically, FIG. 2A illustrates a singular graph 210. Within this representation, the order number 211 associated with this particular transaction has been obfuscated and is represented in the upper left corner of the figure by a placeholder, "Order1."

As described, the nodes (A, B, C) denote distinct financial accounts, while the interconnecting edges symbolize the transactional relationships that exist between these accounts. As shown, the attributes characterizing these transactional relationships encompass both the currency utilized and the corresponding transfer amounts. Similar orders 212 are illustrated adjacent to the graph.

Referring now to FIG. 2B, a comparative analysis of two distinct graph structures 210, 254 is illustrated. The juxtaposition of Order1 251 and Order2 253 elucidates a notable divergence: the absence of node A 255 in Order1 251 and the lack of node B 256 in Order2 253. In aspects, the discrepancy may visually demarcated by colored dots (e.g., red) signifying the missing nodes, with colored dashed lines (e.g., red) indicating the edges that would have connected to these nodes. Centrally positioned between the two graph representations is a synthesized overview 252, highlighting the nodes common to both structures as well as those that are unique, with the differences accentuated by dotted colored lines (e.g., red). This graphical arrangement facilitates an efficient comparison of the two, or potentially multiple, graph configurations.

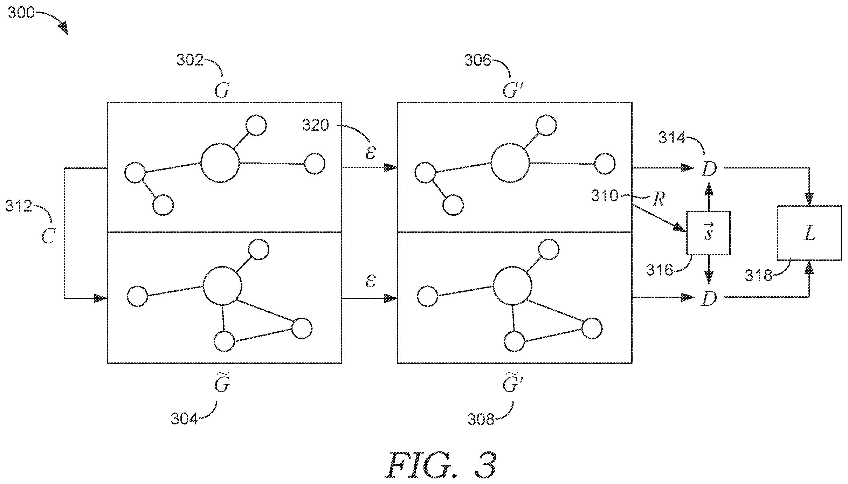

Referring now to FIG. 3, an example of a structure 300 that trains a deep graph neural network is depicted, in accordance with some implementations of the present disclosure. Given the nature of the transactional dataset, which lacks prominent labels, the application of supervised learning techniques is rendered impractical. Consequently, a deep graph informax (DGI) approach is employed, which is better suited to our characteristics of the dataset. DGI maximizes mutual information between patch representations and corresponding high-level summaries of graphs to learn informative node embeddings without requiring labels. To use graph-based machine learning, it is necessary to represent a graph.

As shown in FIG. 3, G 302 represents the graph, where G = (X, A) and X and A represents the set of nodes features and adjacency matrix, respectively. $X = \vec{x}_1, \vec{x}_2, ..., \vec{x}_N$, where N is the number of nodes in the graph and $\vec{x}_i \in \mathbb{R}^F$ represents the features of node i. $A \in \mathbb{R}^{N \times N}$. While A may consist of arbitrary real numbers (or even arbitrary edge features), the graphs are assumed to be unweighted (i.e., $A_{ij} = 1$ if there exists an edge $i \rightarrow j$ in the graph and $A_{ij} = 0$ otherwise). The object of the training is to learn an encoder 320, $\in : \mathbb{R}^{N \times F} \times \mathbb{R}^{N \times N} \rightarrow \mathbb{R}^{N \times F'}$, such that $\in (X,A) = H = \{\vec{h}_1, \vec{h}_2, ..., \vec{h}_N\}$ represents high-level representations $\vec{h}_i \in \mathbb{R}^{F'}$ for each node i.

A key consequence is that the produced node embeddings, $\vec{h}_i$, summarize a patch of the graph centered around node i, rather than just the node itself. An explicit (stochastic) corruption function 312, $: \mathbb{R}^{N \times F} \times \mathbb{R}^{N \times N} \rightarrow \mathbb{R}^{M \times F} \times \mathbb{R}^{M \times M}$ is used to obtain a negative example from the original graph, $\tilde{G} = (\tilde{X}, \tilde{A}) = C(X,A)$ 304. G 302 and $\tilde{G}$ 304 are embedded using the encoder $\in$ to get their representations G' 306 and $\tilde{G}'$ 308, respectively. G' 306 is summarized by passing its patch representations through the readout function $\mathcal{R}$ 310. $\mathcal{R}$ 310 is used to summarize the obtained patch representations into a graph-level representation, where the result of the graph-

level representation is $\vec{s} = \mathcal{R}\ (\in (G'))$.

As a proxy for maximizing the local mutual information, a discriminator is employed, $: \mathbb{R}^{F} \times \mathbb{R}^{F} \rightarrow \mathbb{R}$. Positive samples for D 314 are provided by pairing the summary $\vec{s}$ 316 from (X, A) with patch representations $\vec{h}_j$ of G', while negative samples for $\mathcal{D}$ are provided by pairing the summary $\vec{s}$ 316 with $\vec{\tilde{h}}_j$ of G'. The goal is to maximize the following equation 318 by applying gradient descent:

$$\mathcal{L} = \frac{1}{N+M}(\sum_{i=1}^{N} \mathbb{E}_G[log\ \mathcal{D}\ (\vec{h}_{1,}\vec{s})] + \sum_{i=1}^{M} \mathbb{E}_{G^{\sim}}[log\ (1 - \mathcal{D}(\vec{\tilde{h}}_{j,}\vec{s}))])$$

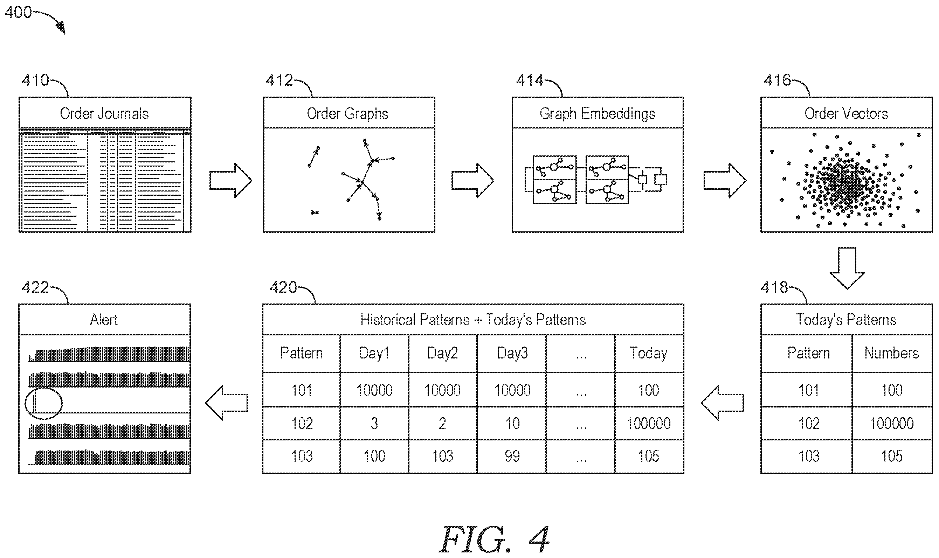

FIG. 4 depicts a diagram 400 of an example network architecture for detecting abnormal payment behavior using graph model embedding and anomaly detection, in accordance with some implementations of the present disclosure.

In some aspects, the procedure for extracting the graph pattern may be methodically delineated: a graph 412 is constructed based on the journal information of each order 410, followed by an embedding process 414, and subsequently, the resultant vector 416 is hashed to generate the graph pattern. In aspects, the graph patterns may significantly diminish the volume of data requiring analysis.

In some aspects, monitoring an order pattern for an interval of time enables the detection of anomalies such as the emergence of new patterns, the disappearance of existing ones, or sudden fluctuations in pattern frequency. Such irregularities may signify system malfunctions, alterations in accounting procedures, or external security breaches. While not all detected anomalies necessitate immediate intervention, monitoring may preempt potential order-related issues that could result in financial losses for an organization.

Over each interval of time (e.g., one day), a pattern 418 is revealed, represented by "101", "102" and "103", including a quantity of each pattern. The historical pattern and quantity are then combined with the pattern and quantity 420 to determine if any pattern has suddenly changed in quantity (i.e., an abnormal pattern). If the number of patterns suddenly decreases or increases, an alert is provided. If the quantity is substantially equal or similar, the pattern is normal. Additionally, patterns identified for the current interval of time may be archived within the historical database, serving as a reference for anomaly detection for the subsequent interval of time.

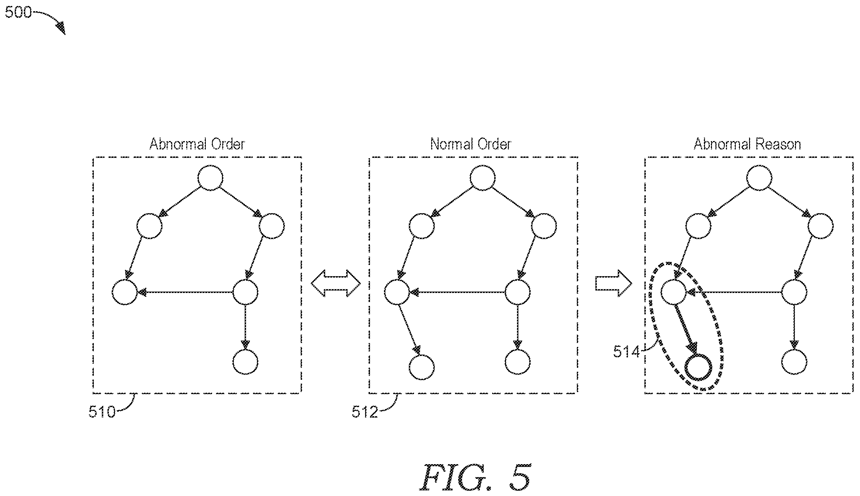

In FIG. 5, an example of a graph similarity based abnormal transaction detection is illustrated, in accordance with some implementations of the present disclosure. In the process of examining an abnormal pattern 510, an order is chosen and its corresponding normal counterpart pattern 512 is identified. Utilizing the graph visualization tool, the disparity between the two graphical representations becomes readily apparent. Given that each vertex within the graph symbolizes an individual account and each edge denotes the transactional linkage between two accounts (i.e., effectively, a ledger entry), a user is equipped to expeditiously pinpoint the precise ledger entry 514 that is problematic.

Upon the identification of outliers via generalized exception detection algorithms, a thorough analysis of these anomalies can be conducted, with a particular emphasis on discerning deviation from established historical patterns. Consequently, in aspects, the two orders are juxtaposed, interrelated orders are identified, and distinctions between them can be elucidated. To facilitate this comparative analysis, an anomaly detection mechanism is provided. The anomaly detection mechanism is adept at pinpointing the order that most closely resembles a given anomalous order, aiding in the comprehensive examination of the aberration.

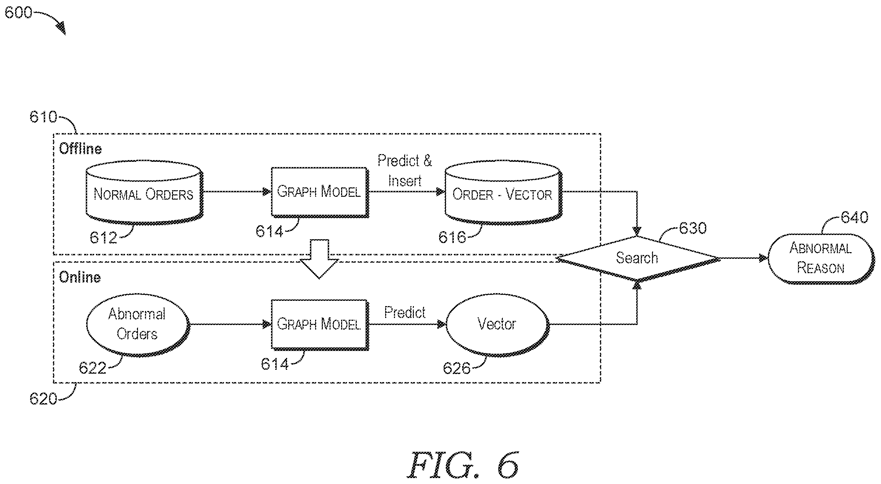

Turning now to FIG. 6, a diagram of a graph similarity based abnormal transaction detection process is illustrated, in accordance with some implementations of the present disclosure. As shown, the procedure bifurcates into two distinct phases: offline and online. In the offline phase 610, historical normative orders 612 are ingested into the graph model 614 to facilitate graph embedding, yielding an order-vector pairing 616 that is subsequently archived within the vector database. In the online phase 620, when an anomalous order 622 necessitates scrutiny, it is subjected to an identical graph embedding process within the same graph model 614 to derive its vector representation 626. Since the same graph model 614 is employed in both phases, the vector representation 626 procured during the online phase 620 enables the retrieval of the most analogous order to the anomalous one through a similarity search 630 within the vector database. Accordingly, the abnormal reason 640 or the ledge entry that is problematic can be determined using the methods described herein.

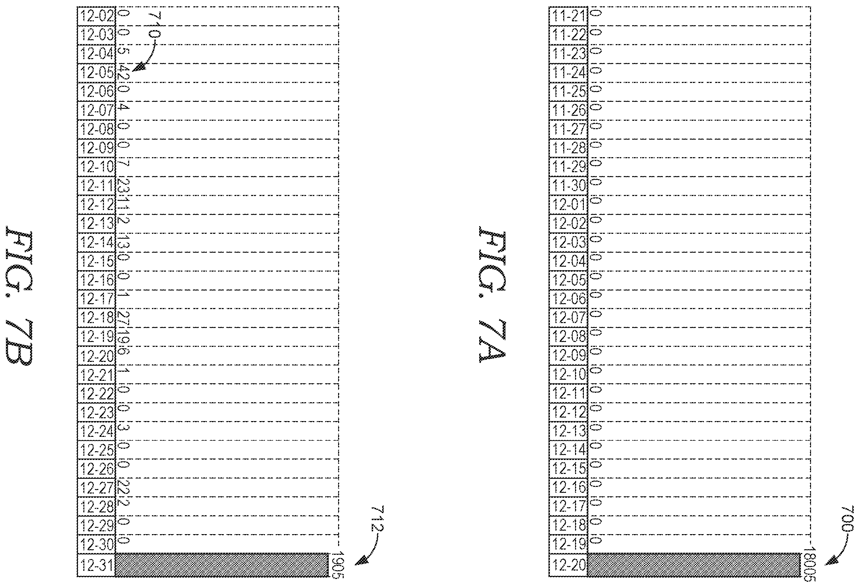

FIGS. 7A-7D provide examples of generalized abnormal transaction detection results, in accordance with some implementations of the present disclosure.

In real world experiments, a stratified random sampling method was used and patterns were gathered for an interval of time to create a test dataset. The model, incorporating DGI, employs a three-layer graph convolutional network (GCN) as the encoder. Additionally, the model integrates a readout function to derive a comprehensive graph representation, resulting in a 256-dimensional vector. Initially, in FIG. 7A, the emergence of novel pattern spikes is shown. As illustrated, a sudden appearance of a new pattern 700 is observed. For the initial 29 days of the time interval, this pattern's frequency is zero. However, on the 30th day, the new pattern 700 emerges, comprising 18,005 orders in this example. Further investigation using methods described herein may reveal the cause of the new pattern.

In FIG. 7B, a spike in an existing pattern is observed. As illustrated, during the initial 29 days of the time interval, the pattern appeared sporadically, reaching its peak 710 on December 5 with 42 orders. However, on the 30th day of the time interval, a sudden surge in the order count 712 of this pattern is observed (as shown, 1,905), which may trigger an alarm within the anomaly detection framework. Further investigation, using methods described herein may reveal the cause of the spike in the existing pattern.

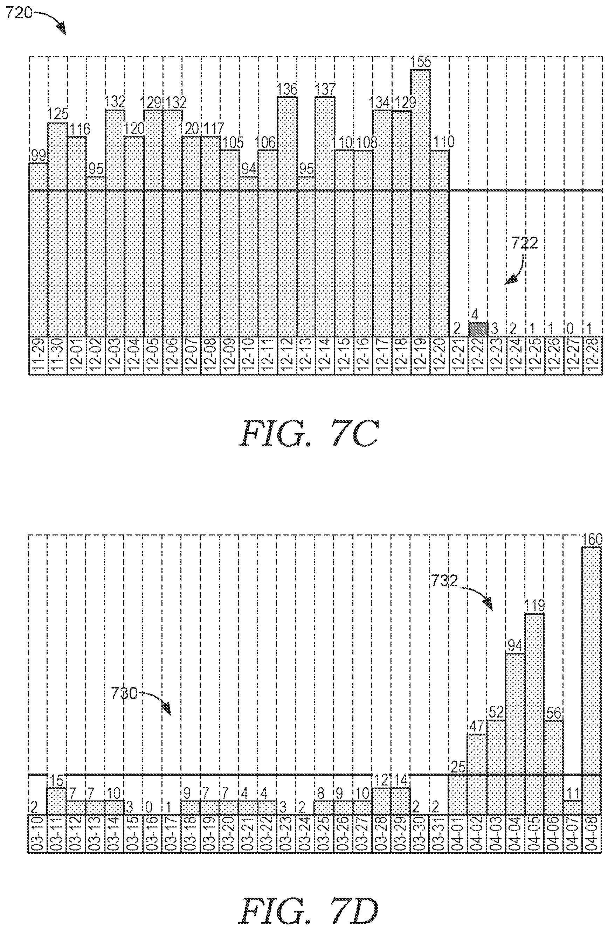

FIG. 7C illustrates an alert triggered by a significant decrease in the order volume of an established pattern 720. In an example, the sharp decline in order numbers 722, may be attributed to a decrease in holiday buyer coupon utilization, which may be linked to changes in marketing strategies. In contrast, FIG 7D illustrates a periodic pattern spike in the order volume. As shown, an unusual and sustained increase in an established pattern 730 is apparent, leading to the activation of the alert system. Continuing the example above, the sharp decline in order numbers 732, may be attributed to an increase in holiday buyer coupon utilization, which may also be linked to changes in marketing strategies.

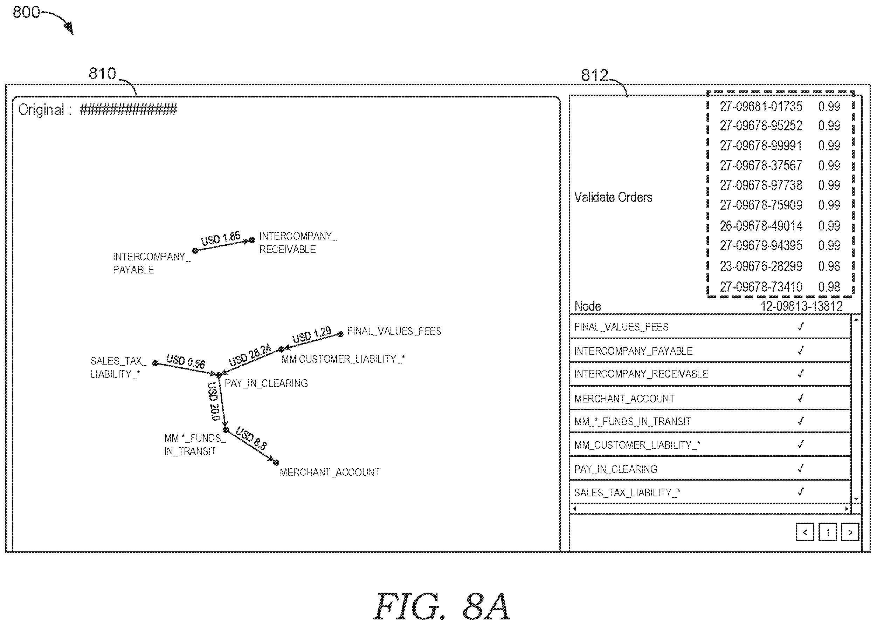

Turning to FIG. 8A, an example 800 of a graphically represented order with similar normative orders shown in the upper right quadrant is depicted, in accordance with some implementations of the present disclosure. A list of validate orders 812 may be provided and ordered by level of similarity. In this example, the first nine orders have a similarity index of 0.99 with the abnormal order 810, while the tenth order has a slightly lower similarity of 0.98. Despite being inherently normative, none of these validate orders 812 perfectly match (i.e., 100% similarity) the abnormal order 810.

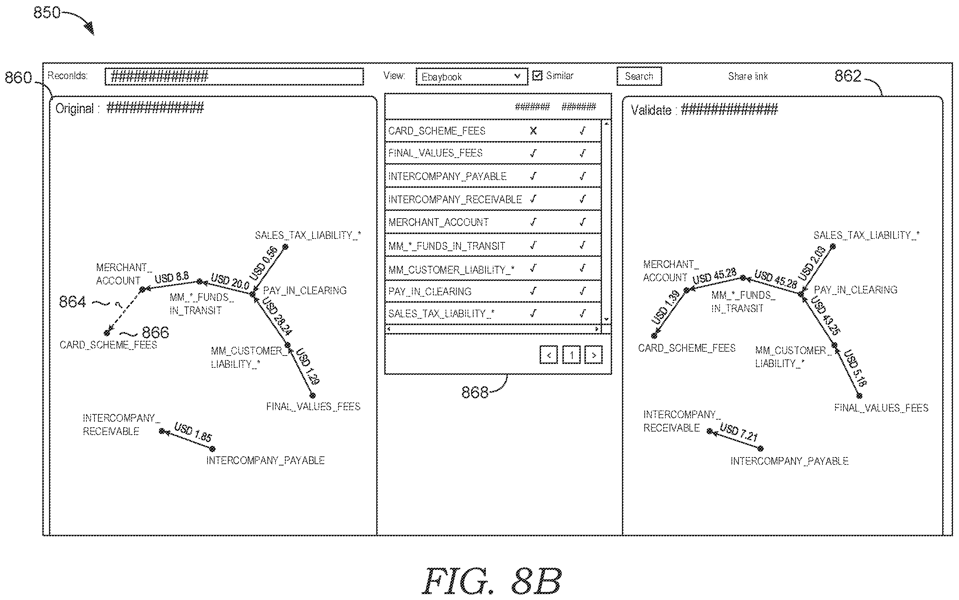

In FIG. 8B, an example 850 of a comparison between an abnormal and a normal order is depicted, in accordance with some implementations of the present disclosure. As shown, a comparison between two different orders (an abnormal order 860 on the left and a normal order 862 on the right). In this example, the abnormal order 860 is missing one node 866 and one connection 864, which may be marked, in some aspects, with a colored line. The space between the figures 868 shows a comparison of the nodes, highlighting the differences between the two orders. This comparison provides a readily accessibly understanding as to why the abnormal order 860 is different.

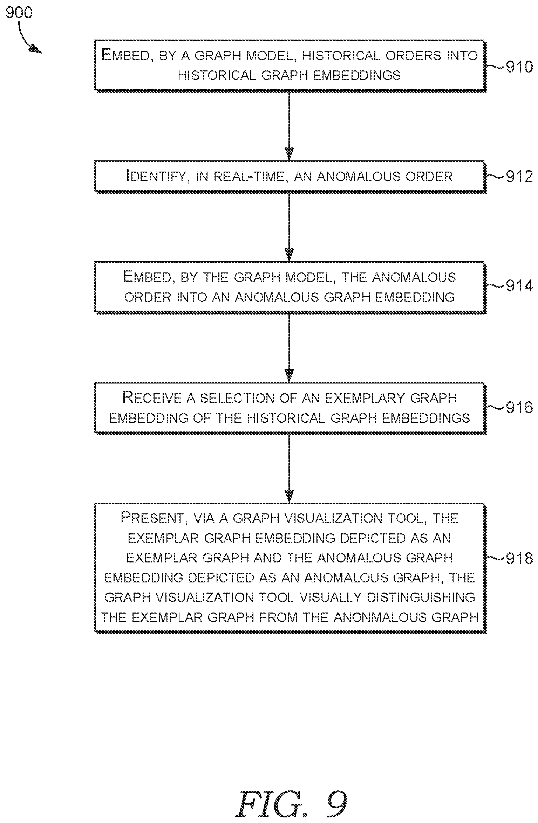

With reference now to FIG. 9, a flow diagram is provided that illustrates a method 900 for detecting abnormal payment behavior using graph model embedding and anomaly detection, in accordance with some implementations of the present disclosure. The method 900 can be performed, for instance, by the abnormal transaction detection system 106 of FIG. 1. Each block of the method 900 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

Initially, as shown at block 910, a graph model embeds historical orders into historical graph embeddings. At block 912, an anomalous order is identified in real-time. At block 914, the graph model embeds the anomalous order into an anomalous graph embedding.

At block 916, a selection of an exemplar graph embedding of the historical graph embeddings is received. The exemplar graph embedding of the historical graph embeddings may be selected based on a similarity search of a vector representation of the anomalous graph to vector representations of the historical graphs stored in a vector database.

At block 918, a graph visualization tool provides the exemplar graph embedding depicted as an exemplar graph and the anomalous graph embedding depicted as an anomalous graph. To do so, the exemplar graph embedding and the anomalous graph embedding may be hashed by the graph visualization tool to generate the exemplar graph and the anomalous graph. Vertices within the exemplar graph and the anomalous graph correspond to accounts and directed edges linking the vertices correspond to transactional connections between pairs of accounts. Additionally, the graph visualization tool visually distinguishes differences between the exemplar graph and the anomalous graph.

In some aspects, the graph visualization tool identifies a presence of anomalous transactions by analyzing, at the graph model, transaction distribution patterns for the interval of time. Additionally or alternatively, the graph visualization tool may detect disappearance of existing anomalies, emergence of previously unknown anomalies, and/or sudden fluctuations in pattern frequency. In some aspects, the presence of anomalous transactions for the interval of time corresponds to system malfunctions, alterations in accounting procedures, or external security breaches. Based on the detecting, orders corresponding to the emergence of previously unknown anomalies, and/or sudden fluctuations in pattern frequency may be archived with the historical orders in a historical database. Based on the anomalous transactions, an alert may be provided.

In FIG. 10, a flow diagram is provided that illustrates a method 1000 for detecting abnormal payment behavior using graph model model embedding and anomaly detection, in accordance with some implementations of the present disclosure. The method 1000 can be performed, for instance, by the abnormal transaction detection system 106 of FIG. 1. Each block of the method 1000 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few. As shown at block 1010, a plurality of orders for an interval of time is received. Each order comprises accounts and transactional connections between pairs of the accounts.

At block 1012, each order of the plurality of orders is embedded by a graph model into an order embedding.

At block 1014, each order embedding is hashed by a graph visualization tool to generate a corresponding graph. Vertices within each corresponding graph correspond to the accounts and directed edges linking the vertices correspond to the transactional connections between pairs of accounts.

At block 1016, a presence of anomalous transactions based on transaction distribution patterns for the interval of time is identified by the graph visualization tool. In some aspects, the anomalous transactions correspond to system malfunctions, alterations in accounting procedures, or external security breaches. The graph visualization tool may detect the disappearance of existing anomalies, emergence of previously unknown anomalies, and/or sudden fluctuations in pattern frequency. In some aspects, based on the anomalous transactions, an alert is provided. Moreover, based on the detecting, the orders corresponding to the emergence of previously unknown anomalies, and/or sudden fluctuations in pattern frequency may be archived with historical orders in a historical database.

Having described implementations of the present disclosure, an exemplary operating environment in which embodiments of the present technology can be implemented is described below in order to provide a general context for various aspects of the present disclosure. Referring initially to FIG. 10 in particular, an exemplary operating environment for implementing embodiments of the present technology is shown and designated generally as computing device 1000. Computing device 1000 is but one example of a suitable computing environment and is not intended to suggest any limitation as to the scope of use or functionality of the technology. Neither should the computing device 1000 be interpreted as having any dependency or requirement relating to any one or combination of components illustrated.

The technology can be described in the general context of computer code or machine-usable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology can be practiced in a variety of system configurations, including hand-held devices, consumer electronics, general-purpose computers, more specialty computing devices, etc. The technology can also be practiced in distributed computing environments where tasks are performed by remote-processing devices that are linked through a communications network.

With reference to FIG. 10, computing device 1000 includes bus 1010 that directly or indirectly couples the following devices: memory 1012, one or more processors 1014, one or more presentation components 1016, input/output (I/O) ports 1018, input/output components 1020, and illustrative power supply 1022. Bus 1010 represents what can be one or more busses (such as an address bus, data bus, or combination thereof). Although the various blocks of FIG. 10 are shown with lines for the sake of clarity, in reality, delineating various components is not so clear, and metaphorically, the lines would more accurately be grey and fuzzy. For example, one can consider a presentation component such as a display device to be an I/O component. Also, processors have memory. The inventors recognize that such is the nature of the art, and reiterate that the diagram of FIG. 10 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 10 and reference to "computing device."

Computing device 1000 typically includes a variety of computer-readable media. Computer-readable media can be any available media that can be accessed by computing device 1000 and includes both volatile and nonvolatile media, removable and non-removable media. By way of example, and not limitation, computer-readable media can comprise computer storage media and communication media. Computer storage media includes both volatile and nonvolatile, removable and non-removable media implemented in any method or technology for storage of information such as computer-readable instructions, data structures, program modules or other data.

Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 1000. The terms "computer storage media" and "computer storage medium" do not comprise signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 1012 includes computer storage media in the form of volatile and/or nonvolatile memory. The memory can be removable, non-removable, or a combination thereof. Exemplary hardware devices include solid-state memory, hard drives, optical-disc drives, etc. Computing device 1000 includes one or more processors that read data from various entities such as memory 1012 or I/O components 1020. Presentation component(s) 1016 present data indications to a user or other device. Exemplary presentation components include a display device, speaker, printing component, vibrating component, etc.

I/O ports 1018 allow computing device 1000 to be logically coupled to other devices including I/O components 1020, some of which can be built in. Illustrative components include a microphone, joystick, game pad, satellite dish, scanner, printer, wireless device, etc. The I/O components 1020 can provide a natural user interface (NUI) that processes air gestures, voice, or other physiological inputs generated by a user. In some instance, inputs can be transmitted to an appropriate network element for further processing. A NUI can implement any combination of speech recognition, touch and stylus recognition, facial recognition, biometric recognition, gesture recognition both on screen and adjacent to the screen, air gestures, head and eye-tracking, and touch recognition associated with displays on the computing device 1000. The computing device 1000 can be equipped with depth cameras, such as, stereoscopic camera systems, infrared camera systems, RGB camera systems, and combinations of these for gesture detection and recognition. Additionally, the computing device 1000 can be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements can be employed to achieve the desired functionality within the scope of the present disclosure. For example, the components in the embodiments depicted in the figures are shown with lines for the sake of conceptual clarity. Other arrangements of these and other components can also be implemented. For example, although some components are depicted as single components, many of the elements described herein can be implemented as discrete or distributed components or in conjunction with other components, and in any suitable combination and location. Some elements can be omitted altogether. Moreover, various functions described herein as being performed by one or more entities can be carried out by hardware, firmware, and/or software, as described below. For instance, various functions can be carried out by a processor executing instructions stored in memory. As such, other arrangements and elements (e.g., machines, interfaces, functions, orders, and groupings of functions) can be used in addition to or instead of those shown.

Embodiments described herein can be combined with one or more of the specifically described alternatives. In particular, an embodiment that is claimed can contain a reference, in the alternative, to more than one other embodiment. The embodiment that is claimed can specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" can be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology can generally refer to the technical solution environment and the schematics described herein, it is understood that the techniques described can be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and can be employed without reference to other features and subcombinations. This is contemplated by and is within the scope of the claims.

# EP 4 715 714 A1

**Claims**

1. One or more computer storage media storing computer-usable instructions that, when used by one or more computing devices, cause the one or more computing devices to perform operations, the operations comprising:

   embedding, by a graph model, historical orders into historical graph embeddings;
   identifying, in real-time, an anomalous order;
   embedding, by the graph model, the anomalous order into an anomalous graph embedding;
   receiving a selection of an exemplar graph embedding of the historical graph embeddings; and
   providing, via a graph visualization tool, the exemplar graph embedding depicted as an exemplar graph and the anomalous graph embedding depicted as an anomalous graph, the graph visualization tool visually distinguishing the exemplar graph from the anomalous graph.

2. The one or more computer storage media of claim 1, wherein vertices within the exemplar graph and the anomalous graph correspond to accounts and directed edges linking the vertices correspond to transactional connections between pairs of accounts.

3. The one or more computer storage media of claim 1 or 2, further comprising identifying, by the graph visualization tool, a presence of anomalous transactions by analyzing, at the graph model, transaction distribution patterns for the interval of time;
   and/or
   further comprising, hashing the exemplar graph embedding and the anomalous graph embedding, by the graph visualization tool, to generate the exemplar graph and the anomalous graph.

4. The one or more computer storage media of any one of the preceding claims, further comprising, detecting, by the graph visualization tool, disappearance of existing anomalies, emergence of previously unknown anomalies, and/or sudden fluctuations in pattern frequency.

5. The one or more computer storage media of any one of the preceding claims, wherein the presence of anomalous transactions for the interval of time corresponds to system malfunctions, alterations in accounting procedures, or external security breaches;

   and optionally,
   further comprising, based on the anomalous transactions, providing an alert.

6. The one or more computer-storage media of any one of the preceding claims, further comprising, based on the detecting, archiving orders corresponding to the emergence of previously unknown anomalies, and/or sudden fluctuations in pattern frequency with the historical orders in a historical database.

7. The one or more computer-storage media of any one of the preceding claims, further comprising determining the exemplar graph embedding of the historical graph embeddings based on a similarity search of a vector representation of the anomalous graph to vector representations of the historical graphs stored in a vector database.

8. A computer-implemented method comprising:

   receiving a plurality of orders for an interval of time, each order comprising accounts and transactional connections between pairs of the accounts;
   embedding each order of the plurality of orders, by a graph model, into an order embedding;
   hashing each order embedding, by a graph visualization tool, to generate a corresponding graph, wherein vertices within each corresponding graph correspond to the accounts and directed edges linking the vertices correspond to the transactional connections between pairs of accounts; and
   identifying, by the graph visualization tool, a presence of anomalous transactions based on transaction distribution patterns for the interval of time.

9. The computer-implemented method of claim 8, wherein the anomalous transactions correspond to system malfunctions, alterations in accounting procedures, or external security breaches;
   and/or
   further comprising, based on the anomalous transactions, providing an alert.

10. The computer-implemented method of claim 8 or 9, further comprising, detecting, by the graph visualization tool, disappearance of existing anomalies, emergence of previously unknown anomalies, and/or sudden fluctuations in pattern frequency.

11. The computer-implemented method of any one of claims 8 to 10, further comprising, based on the detecting, archiving orders corresponding to the emergence of previously unknown anomalies, and/or sudden fluctuations in pattern frequency with historical orders in a historical database.

12. A computer system comprising:

   one or more processors; and
   one or more computer storage medium storing computer-usable instructions that, when used by the one or more processors, causes the computer system to perform operations comprising:

      receiving a plurality of orders, each order comprising accounts and transactional connections between pairs of the accounts;
      embedding each order of the plurality of orders, by a graph model, into an order embedding;
      hashing each order embedding corresponding to the plurality of orders to generate order graphs, wherein vertices within each corresponding graph correspond to the accounts and directed edges linking the vertices correspond to the transactional connections between pairs of accounts; and
      determining an anomalous transaction based on a similarity search of a vector representations of the order graphs to vector representations of historical graphs stored in a database.

13. The computer system of claim 12, further comprising embedding, by a graph model, historical orders into historical graph embeddings;

   and optionally,
   further hashing each of the historical graph embeddings corresponding to the historical orders to generate historical graphs.

14. The computer system of claim 12 or 13, wherein the anomalous transaction corresponds to a system malfunction, an alteration in accounting procedures, or an external security breach;
   and/or
   further comprising, detecting, by the graph visualization tool, disappearance of existing anomalies, emergence of previously unknown anomalies, and/or sudden fluctuations in pattern frequency.

15. The computer system of any one of claims 12 to 14, further comprising, based on the anomalous transaction, providing an alert.

100

104

ONLINE TRANSACTION
PLATFORM

102

110

USER DEVICE

108

APP

NETWORK

ABNORMAL
TRANSACTION
DETECTION SYSTEM

106

## FIG. 1

*FIG. 2A*

*FIG. 2B*

*FIG. 3*

400

410 — Order Journals

412 — Order Graphs

414 — Graph Embeddings

416 — Order Vectors

418 — Today's Patterns

| Pattern | Numbers |
|---------|---------|
| 101 | 100 |
| 102 | 100000 |
| 103 | 105 |

420 — Historical Patterns + Today's Patterns

| Pattern | Day1 | Day2 | Day3 | ... | Today |
|---------|------|------|------|-----|-------|
| 101 | 10000 | 10000 | 10000 | ... | 100 |
| 102 | 3 | 2 | 10 | ... | 100000 |
| 103 | 100 | 103 | 99 | ... | 105 |

422 — Alert

*FIG. 4*

FIG. 5

*FIG. 6*

700

18005

| 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | |
|---|---|---|---|---|---|---|---|---|---|---|---|---|---|---|---|---|---|---|---|---|---|---|---|---|---|---|---|---|---|---|
| 11-21 | 11-22 | 11-23 | 11-24 | 11-25 | 11-26 | 11-27 | 11-28 | 11-29 | 11-30 | 12-01 | 12-02 | 12-03 | 12-04 | 12-05 | 12-06 | 12-07 | 12-08 | 12-09 | 12-10 | 12-11 | 12-12 | 12-13 | 12-14 | 12-15 | 12-16 | 12-17 | 12-18 | 12-19 | 12-20 | |

## FIG. 7A

712

1905

710

| 0 | 0 | 5 | 42 | 0 | 4 | 0 | 0 | 7 | 23 | 11 | 2 | 13 | 0 | 0 | 1 | 27 | 19 | 6 | 1 | 0 | 0 | 3 | 0 | 0 | 22 | 2 | 0 | 0 | |
|---|---|---|---|---|---|---|---|---|---|---|---|---|---|---|---|---|---|---|---|---|---|---|---|---|---|---|---|---|---|
| 12-02 | 12-03 | 12-04 | 12-05 | 12-06 | 12-07 | 12-08 | 12-09 | 12-10 | 12-11 | 12-12 | 12-13 | 12-14 | 12-15 | 12-16 | 12-17 | 12-18 | 12-19 | 12-20 | 12-21 | 12-22 | 12-23 | 12-24 | 12-25 | 12-26 | 12-27 | 12-28 | 12-29 | 12-30 | 12-31 |

## FIG. 7B

720

*FIG. 7C*

*FIG. 7D*

EP 4 715 714 A1

800

810

812

Original : ###############

Validate Orders

INTERCOMPANY_
PAYABLE
USD 1.85
INTERCOMPANY_
RECEIVABLE

FINAL_VALUES_FEES
USD 1.29
MM CUSTOMER_LIABILITY_*
USD 28.24
SALES_TAX_
LIABILITY_*
USD 0.56
PAY_IN_CLEARING
USD 20.0
MM_*_FUNDS_
IN_TRANSIT
USD 8.8
MERCHANT_ACCOUNT

| | |
|---|---|
| 27-09681-01735 | 0.99 |
| 27-09678-95252 | 0.99 |
| 27-09678-99991 | 0.99 |
| 27-09678-37567 | 0.99 |
| 27-09678-97738 | 0.99 |
| 27-09678-75909 | 0.99 |
| 26-09678-49014 | 0.99 |
| 27-09679-94395 | 0.99 |
| 23-09676-28299 | 0.98 |
| 27-09678-73410 | 0.98 |

| Node | 12-09813-13812 |
|---|---|
| FINAL_VALUES_FEES | ✓ |
| INTERCOMPANY_PAYABLE | ✓ |
| INTERCOMPANY_RECEIVABLE | ✓ |
| MERCHANT_ACCOUNT | ✓ |
| MM_*_FUNDS_IN_TRANSIT | ✓ |
| MM_CUSTOMER_LIABILITY_* | ✓ |
| PAY_IN_CLEARING | ✓ |
| SALES_TAX_LIABILITY_* | ✓ |

< 1 >

*FIG. 8A*

*FIG. 8B*

EP 4 715 714 A1

900

EMBED, BY A GRAPH MODEL, HISTORICAL ORDERS INTO HISTORICAL GRAPH EMBEDDINGS ~910

IDENTIFY, IN REAL-TIME, AN ANOMALOUS ORDER ~912

EMBED, BY THE GRAPH MODEL, THE ANOMALOUS ORDER INTO AN ANOMALOUS GRAPH EMBEDDING ~914

RECEIVE A SELECTION OF AN EXEMPLARY GRAPH EMBEDDING OF THE HISTORICAL GRAPH EMBEDDINGS ~916

PRESENT, VIA A GRAPH VISUALIZATION TOOL, THE EXEMPLAR GRAPH EMBEDDING DEPICTED AS AN EXEMPLAR GRAPH AND THE ANOMALOUS GRAPH EMBEDDING DEPICTED AS AN ANOMALOUS GRAPH, THE GRAPH VISUALIZATION TOOL VISUALLY DISTINGUISHING THE EXEMPLAR GRAPH FROM THE ANONMALOUS GRAPH ~918

*FIG. 9*

1000

MEMORY

1012

PROCESSOR(S)

1014

PRESENTATION
COMPONENT(S)

1016

RADIO(S)

1024

I/O PORT(S)

1018

I/O COMPONENTS

1020

POWER SUPPLY

1022

1010

*FIG. 10*

# EUROPEAN SEARCH REPORT

**Application Number**

EP 25 20 2766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/259756 A1 (MCTHROW MICHAEL [US] ET AL) 17 August 2023 (2023-08-17) * paragraphs [0016], [0025], [0026], [0034], [0033] - [0038], [0051] * ----- | 1-15 | INV. G06Q20/40 G06N3/042 G06N3/08 |
| A | SAYAR ALPEREN ET AL: "GRAFRAUD: Fraud Detection using Graph Databases and Neural Networks", 2023 4TH INTERNATIONAL INFORMATICS AND SOFTWARE ENGINEERING CONFERENCE (IISEC), IEEE, 21 December 2023 (2023-12-21), pages 1-4, XP034519479, DOI: 10.1109/IISEC59749.2023.10391038 [retrieved on 2024-01-19] * II AND IV * ----- | 1-15 | |
| X | US 2022/172211 A1 (MUTHUSWAMY SRINIVASAN S [IN] ET AL) 2 June 2022 (2022-06-02) * paragraphs [0027], [0031], [0035] - [0038], [0053]; claim 1; figure 4 * ----- | 1-15 | |
| X | CN 118 298 232 A (UNIV HANGZHOU DIANZI) 5 July 2024 (2024-07-05) * paragraphs [0002], [0004]; figures 2,3 * ----- | 1-15 | **TECHNICAL FIELDS SEARCHED (IPC)** G06Q |
| A | SHIQI LOU ET AL: "GADY: Unsupervised Anomaly Detection on Dynamic Graphs", ARXIV.ORG, CORNELL UNIVERSITY LIBRARY, 201 OLIN LIBRARY CORNELL UNIVERSITY ITHACA, NY 14853, 25 October 2023 (2023-10-25), XP091644418, * the whole document * ----- -/-- | 1-15 | |

The present search report has been drawn up for all claims

| Place of search | Date of completion of the search | Examiner |
|---|---|---|
| The Hague | 6 February 2026 | Wolles, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 20 2766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHENGJIE HUANG ET AL: "Demystifying Bitcoin Address Behavior via Graph Neural Networks", ARXIV.ORG, CORNELL UNIVERSITY LIBRARY, 201 OLIN LIBRARY CORNELL UNIVERSITY ITHACA, NY 14853, 26 November 2022 (2022-11-26), XP091379271, * the whole document * | 1-15 | |
| A | EP 4 270 248 A1 (FEEDZAI CONSULTADORIA E INOVACAO TECNOLOGICA S A [PT]) 1 November 2023 (2023-11-01) * the whole document * | 1-15 | |
| A | US 2024/062041 A1 (CHOUDHARY AKASH [IN] ET AL) 22 February 2024 (2024-02-22) * the whole document * | 1-14 | |
| A | XIA PINGFAN ET AL: "A Novel Spatiotemporal Prediction Approach Based on Graph Convolution Neural Networks and Long Short-Term Memory for Money Laundering Fraud", ARABIAN JOURNAL FOR SCIENCE AND ENGINEERING, SPRINGER BERLIN HEIDELBERG, BERLIN/HEIDELBERG, vol. 47, no. 2, 3 September 2021 (2021-09-03), pages 1921-1937, XP037696631, ISSN: 2193-567X, DOI: 10.1007/S13369-021-06116-2 [retrieved on 2021-09-03] * the whole document * | 1-15 | TECHNICAL FIELDS SEARCHED (IPC) |

-/--

The present search report has been drawn up for all claims

| Place of search | Date of completion of the search | Examiner |
|---|---|---|
| The Hague | 6 February 2026 | Wolles, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

European Patent Office
Office européen des brevets

## EUROPEAN SEARCH REPORT

**Application Number**

EP 25 20 2766

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG HEWEN ET AL: "Effective Edge-wise Representation Learning in Edge-Attributed Bipartite Graphs", PROCEEDINGS OF THE 26TH INTERNATIONAL ACM SIGACCESS CONFERENCE ON COMPUTERS AND ACCESSIBILITY, ACMPUB27, NEW YORK, NY, USA, 25 August 2024 (2024-08-25), pages 3081-3091, XP098349559, DOI: 10.1145/3637528.3671805 ISBN: 979-8-4007-1058-2 * abstract * ----- | 1-15 | |
| A | FU DONGQI ET AL: "Privacy-Preserving Graph Machine Learning from Data to Computation: A Survey", ACM SIGKDD EXPLORATIONS NEWSLETTER, ASSOCIATION FOR COMPUTING MACHINERY, INC, US, vol. 25, no. 1, 26 June 2023 (2023-06-26), pages 54-72, XP059099994, ISSN: 1931-0145, DOI: 10.1145/3606274.3606280 * the whole document * ----- | 1-15 | TECHNICAL FIELDS SEARCHED (IPC) |

The present search report has been drawn up for all claims

| Place of search | Date of completion of the search | Examiner |
|---|---|---|
| The Hague | 6 February 2026 | Wolles, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

**EP 4 715 714 A1**

## ANNEX TO THE EUROPEAN SEARCH REPORT
## ON EUROPEAN PATENT APPLICATION NO.

EP 25 20 2766

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2026

| Patent document cited in search report | | Publication date | Patent family member(s) | | Publication date |
|---|---|---|---|---|---|
| US 2023259756 | A1 | 17-08-2023 | EP | 4227855 A1 | 16-08-2023 |
| | | | JP | 2023118076 A | 24-08-2023 |
| | | | US | 2023259756 A1 | 17-08-2023 |
| US 2022172211 | A1 | 02-06-2022 | NONE | | |
| CN 118298232 | A | 05-07-2024 | NONE | | |
| EP 4270248 | A1 | 01-11-2023 | EP | 4270248 A1 | 01-11-2023 |
| | | | EP | 4270249 A1 | 01-11-2023 |
| US 2024062041 | A1 | 22-02-2024 | NONE | | |

EPO FORM P0459

For more details about this annex : see Official Journal of the European Patent Office, No. 12/82

27